# EUROPÄISCHE PATENTSCHRIFT

(11) **EP 0 498 239 B1**
(45) Veröffentlichungstag und Bekanntmachung des Hinweises auf die Patenterteilung: **31.08.1994**
(21) Anmeldenummer: 92101199.5
(22) Anmeldetag: 25.01.1992
(51) Int. Cl.: H05B 7/148, H05B 7/156

(54) **Verfahren zur Elektrodenregelung eines Gleichstrom-Lichtbogenofens und Elektrodenregeleinrichtung**
Method and device for control of an electrode in a DC arc furnace
Procédé et appareil de commande d'une électrode d'un four à arc à courant continu

(30) Priorität: 08.02.1991 CH 406/91
(43) Veröffentlichungstag der Anmeldung: 12.08.1992
(73) Patentinhaber: ASEA BROWN BOVERI AG, 5400 Baden (CH)
(72) Erfinder: Strebel, Eduard, CH-5415 Nussbaumen (CH)

(56) Entgegenhaltungen:
- EP-A- 0 068 180
- DE-A- 3 439 097
- DE-A- 3 442 417
- DE-A- 3 528 750
- FR-A- 2 066 645
- ELEKTROWÄRME INTERNATIONAL Bd. 41, Nr. 4, August 1983, ESSEN, BRD Seiten 176 -180; REINHARD & GRÜNBERG: 'Die Stromversorgung des ersten Gleichstrom-Lichtbogenofens'

## Beschreibung

Bei der Erfindung wird ausgegangen von einem Verfahren zur Elektrodenregelung eines Gleichstrom-Lichtbogenofens nach dem Oberbegriff des Patentanspruchs 1 und von einer Elektrodenregeleinrichtung nach dem Oberbegriff des Patentanspruchs 5.

### STAND DER TECHNIK

Mit den Oberbegriffen nimmt die Erfindung auf einen Stand der Technik Bezug, wie er aus der EP-B1-0 068 180 bekannt ist. Dort wird ein Lichtbogenofen mit Gleichstromanspeisung mit 2 Regelkreisen geregelt. Ein Stromregler sorgt für konstanten Strom, entsprechend einem vorgegebenen Stromsollwert. Ein Elektrodenregelkreis beeinflusst die Position der Elektrode und somit die Lichtbogenlänge. Bei einer Verlängerung des Lichtbogens muss der Stromregler die Spannung erhöhen bzw. den Gleichrichter so ansteuern, dass der Strom konstant bleibt. Dies geht jedoch nur, solange Spannungsreserve vorhanden ist. Die Regelung der Elektrode erfolgt mittels eines adaptierbaren Gleichspannungsreglers. Als Gleichspannungsistwert dient die Lichtbogenspannung, die über ein Dämpfungsglied einem Vergleicher bzw. Summierer zugeführt ist. Der Gleichspannungssollwert muss jeweils unter Berücksichtigung der Transformator-Spannungsstufe und des Elektrodenstromes für jeden Arbeitspunkt berechnet werden. Er wird zunächst der Transformatorstufe des Stromrichtertransformators, und damit dem möglichen Spannungshub des Stromrichters entsprechend, mittels eines Begrenzers so begrenzt, dass der Stromrichter stationär maximal knapp unterhalb der Gleichrichtergrenzlage betrieben wird. Der Sollwert wird geglättet dem Summierer zugeführt, um bei Spannungssollwertsprüngen kein Überschwingen des Istwertes zu bekommen, was ein Abreissen des Lichtbogens bewirken könnte.

### DARSTELLUNG DER ERFINDUNG

Die Erfindung, wie sie in den Patentansprüchen 1 und 5 definiert ist, löst die Aufgabe, ein Verfahren zur Elektrodenregelung eines Gleichstrom-Lichtbogenofens und eine Elektrodenregeleinrichtung der eingangs genannten Art derart weiterzuentwickeln, dass eine einfachere Elektrodenregelung möglich wird.

Ein Vorteil der Erfindung besteht darin, dass die Berechnung des Sollwertes für die Elektrodenregelung umgangen werden kann. Anstelle der Gleichspannung wird ein dem Aussteuerwinkel proportionales Signal aus dem Stromregler zur Elektrodenregelung genommen. Dieses Signal wird über ein Dämpfungsglied geführt, das neben einer Signalanpassung auch die Grenzwerte überwacht und unerwünschte Frequenzen aussiebt. Als Sollwert gibt man einen Wert vor, der die mittlere Aussteuerung des Gleichrichters bestimmt.

Ein weiterer Vorteil besteht darin, dass sich die Lichtbogenlänge, unabhängig von einer Spannungsänderung, so einstellt, dass der verlangte Strom mit einer vorgegebenen Aussteuerung am Gleichrichter erreicht wird. Damit steht für die Konstanthaltung des Stromes immer ein ausreichender Regelbereich zur Verfügung.

Mit der Ausregelung auf konstante Aussteuerung am Gleichrichter erreicht man auch einen konstanten mittleren Leistungsfaktor im speisenden Netz. Dies ist besonders wichtig bei einer statischen Kompensation, mit der auf einen vorgegebenen Leistungsfaktor kompensiert wird.

Die Leistung eines Arbeitspunktes ist sehr einfach bestimmt mit der Anwahl einer Transformator-Spannungsstufe und der Vorgabe des Gleichstromes.

### KURZE BESCHREIBUNG DER ZEICHNUNGEN

Die Erfindung wird nachstehend anhand von Ausführungsbeispielen erläutert. Es zeigen:
- Fig. 1: einen Gleichstrom-Lichtbogenofen mit einem Stromregelkreis und einem Elektrodenregelkreis und
- Fig. 2: ein Kennliniendiagramm für Elektrodenregler-Führungsgrössensignale in Abhängigkeit von Stromsollwerten für unterschiedliche Wirkfaktoren.

### WEGE ZUR AUSFÜHRUNG DER ERFINDUNG

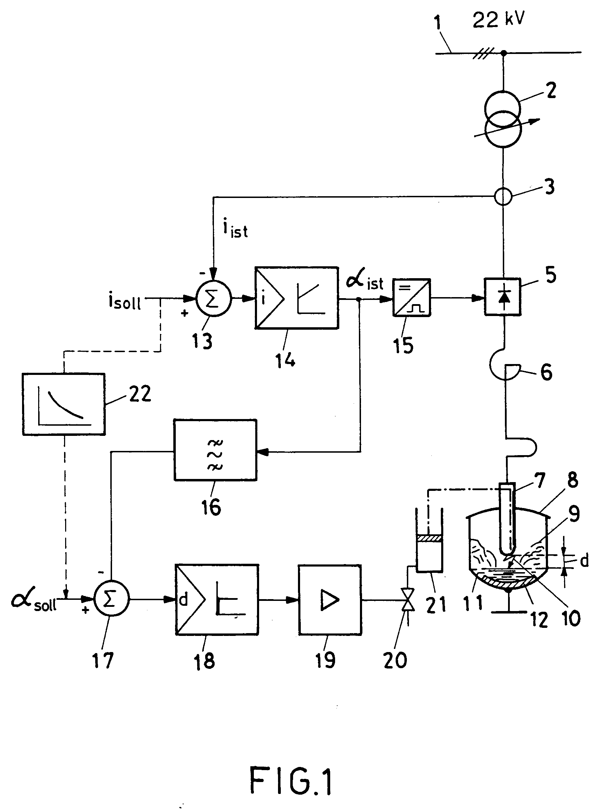

Die Figur 1 zeigt einen Ofentransformator (2) mit mehreren Schaltstufen, der einerseits an ein Wechselstromnetz (1) mit einer Wechselspannung von 22 kV und andererseits an den Wechselspannungseingang eines Stromrichters bzw. Gleichrichters (5) angeschlossen ist. Die Gleichspannungsseite des Gleichrichters (5) ist über eine Drosselspule (6) mit einer 1. Elektrode bzw. Kathode (7) eines Lichtbogenofens (8) verbunden. Eine im Bodenbereich des Lichtbogenofens (8) angeordnete 2. Elektrode bzw. Anode (12) ist mit dem Pluspol des Gleichrichters (5) verbunden. Zwischen dem unteren Ende der Kathode (7) und einem mit (9) bezeichneten zu schmelzenden Gut bzw Schrott sowie mit der Oberfläche einer Schmelze bzw. eines Schmelzbades (11) brennt ein Lichtbogen (10). (d) bezeichnet einen Elektrodenabstand bzw. den Abstand zwischen der Kathode (7) und dem Schmelzbad (11).

Mittels eines Stromwandlers (3) in der Wechselstromzuleitung zum Gleichrichter (5) wird ein Stromistwertsignal (iᵢₛₜ) detektiert und einem negierenden Eingang eines Vergleichers bzw. Summierers (13) zugeführt. Einem nichtnegierenden Eingang dieses Summierers (13) ist z. B. von einem nicht dargestellten Potentiometer ein vorgebbares Stromsollwertsignal (iₛₒₗₗ) zugeführt. Ausgangsseitig ist der Summierer (13) mit einem Stromregler (14) mit Proportional-Integral-Charakteristik verbunden, welcher ausgangsseitig ein Gleichrichter-Stellgrössensignal (αᵢₛₜ), entsprechend einem Zündwinkel, einem Zündimpulswandler (15) liefert, der ausgangsseitig den Gleichrichter (5) steuert.

Das Gleichrichter-Stellgrössensignal (αᵢₛₜ) ist über ein Dämpfungsglied bzw. ein Bandpassfilter (16) zur Signalanpassung, Grenzwertüberwachung und Aussiebung unerwünschter Frequenzen mit einem negierenden Eingang eines Summierers (17) verbunden, dessen nichtnegierendem Eingang ein vorgebbares Elektrodenregler-Führungsgrössensignal (αₛₒₗₗ), entsprechend einem Zündwinkelsollwert im Bereich von 15° - 50°, vorzugsweise im Bereich von 25° - 35°, zugeführt ist. Ausgangsseitig ist der Summierer (17) mit einem Elektrodenregler (18) mit einer Proportionalcharakteristik verbunden, der ausgangsseitig über einen Ventilverstärker (19) auf ein Ventil (20) einer Elektrodenverstelleinrichtung (21) wirkt. Die Elektrodenverstelleinrichtung (21), z. B. eine hydraulische Pumpe mit einer Verstellmechanik und einem Elektrodengeschwindigkeitsregler, ist mechanisch mit der Kathode (7) gekoppelt und ermöglicht deren Höhenverstellung; sie wirkt als ein Verzögerungsglied 1. Ordnung.

Die Elektrodenregelung arbeitet etwa 10mal langsamer als die Stromregelung. Die Höhenverstellung der Kathode (7) erfolgt so, dass der Gleichrichter (5) im Mittel mit einer Aussteuerung von z. B. 25°el. arbeitet, unabhängig von der Sekundärspannung des Ofentransformators (2) und vom eingestellten Stromsollwert (iₛₒₗₗ). Der Einfachheit halber sind Werte und ihnen zugeordnete Signale gleich bezeichnet.

Die vom Bandpassfilter (16) auszusiebenden Frequenzen umfassen Frequenzen im Bereich von 0,5 Hz - 20 Hz.

Mit der Regelung auf konstante Aussteuerung am Gleichrichter (5) erreicht man einen konstanten mittleren Leistungsfaktor im speisenden Wechselstromnetz (1). Die Leistung eines Arbeitspunktes ist sehr einfach bestimmt mit der Anwahl einer Spannungsstufe des Ofentransformators (2) und der Vorgabe des Gleichstromes.

Will man mit einer Spannungsstufe des Ofentransformators (2) verschiedene Arbeitspunkte bzw. eine variable Leistung fahren, so wird der Stromsollwert (iₛₒₗₗ) entsprechend vorgegeben. Bei reduziertem Strom aber immer noch gleicher Aussteuerung am Gleichrichter (5) erhält man wohl kleinere Leistungen. Infolge geringerer Spannungsverluste im Wechselstromnetz (1) wird der Lichtbogen (10) jedoch länger. Der Ofenprozess verlangt aber bei kleineren Leistungen auch kürzere Lichtbogen (10). Um dies zu erreichen, kann man bei einer Veränderung des Stromsollwertes (iₛₒₗₗ) gleichzeitig auch einen entsprechenden neuen Sollwert für die Aussteuerung des Gleichrichters (5) vorgeben. Zu diesem Zweck ist ein Funktionsgeber (22) vorgesehen, der in Abhängigkeit vom Stromsollwert (iₛₒₗₗ) das Elektrodenregler-Führungsgrössensignal (αₛₒₗₗ) vorgibt, wie in Fig. 1 gestrichelt angedeutet. Damit ist es auch möglich, den Leistungsbereich zu vergrössern.

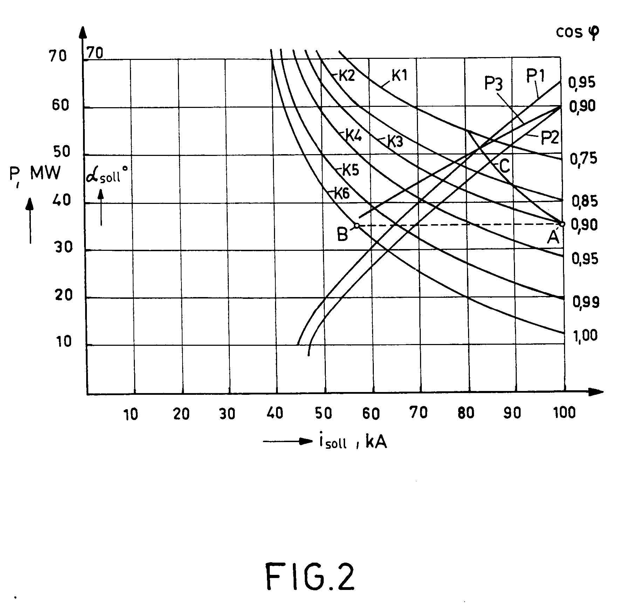

Fig. 2 zeigt mittels des Funktionsgebers (22) realisierte Funktionen, entsprechend Kurven (K1 - K6), welche das Elektrodenregler-Führungsgrössensignal (αₛₒₗₗ) in elektr. Grad in Abhängigkeit vom Stromsollwert (iₛₒₗₗ) in kA für unterschiedliche Wirkfaktoren cos φ (0,75 - 1,00) als Parameter darstellen. Auf der Ordinate ist zusätzlich die dem Wechselstromnetz (1) entnommene Wirkleistung (P) in MW aufgetragen. Die zahlenmässige Übereinstimmung mit dem Elektrodenregler-Führungsgrössensignal (αₛₒₗₗ) ist rein zufällig.

Das dargestellte Beispiel bezieht sich auf eine Anlage mit einer Wirkleistung (P) von 60 MW bei einem Gleichstrom von 100 kA und einer installierten Blind- bzw. Kompensationsleistung von 30 MVar. Die Anlage ist so ausgelegt, dass sich bei 100 kA und einer Aussteuerung des Gleichrichters (5) mit einem Gleichrichter-Stellgrössensignal (αᵢₛₜ) von 35° am einspeisenden Wechselstromnetz (1) ein Wirkfaktor cos φ = 0,9 ergibt, entsprechend einem Punkt (A). Eine gestrichelt dargestellte Verbindungslinie (A - B) zeigt die Begrenzung für eine minimale Gleichrichter-Aussteuerung. Ebenso können die Kurven (K1) und (K6) für cos φ = 0,75 und 1,0 als Begrenzung betrachtet werden. Eine Kurve (C) entspricht einer Aussteuerung des Gleichrichters (5), bei der eine konstante Blindleistung vom Wechselstromnetz (1) gemäss Punkt (A) bezogen wird; sie ist demzufolge eine Grenzlinie für maximale Netzblindleistung. Die Funktion αₛₒₗₗ = f(iₛₒₗₗ) soll also in dem so begrenzten Bereich liegen, vorzugsweise der Kurve (K3) für cos φ = 0,9 entsprechen.

Würde man die Aussteuerung von αₛₒₗₗ = 35° beibehalten und den Strom sukzessive von 100 kA auf 60 kA verringern, so käme man gemäss einer Wirkleistungskurve (P3) von einer Wirkleistung von 60 MW auf eine solche von 38 MW bei einem cos φ ≈ 1. Dies sind gut 60 % der maximalen Leistung.

Wird αₛₒₗₗ = f(iₛₒₗₗ) vorgegeben, wobei z. B. alle Arbeitspunkte mit cos φ = 0,9 gemäss der Kurve (K3) gefahren werden, so benötigt man bei 50 kA einen Steuerwinkel (αₛₒₗₗ) von 65° und erreicht damit eine Wirkleistung (P) von 15 MW gemäss einer Wirkleistungskurve (P2), somit noch 25 % der maximalen Leistung. Eine weitere Wirkleistungskurve (P1) gilt für cos φ = 0,95 (konstant).

## Patentansprüche

1. Verfahren zur Elektrodenregelung eines Gleichstrom-Lichtbogenofens (8),
a) dessen Lichtbogenstromstärke mittels eines Regelsignals bzw. eines Gleichrichter-Stellgrössensignals (αᵢₛₜ) auf einen vorgebbaren Stromsollwert (iₛₒₗₗ) geregelt wird,
dadurch gekennzeichnet,
b) dass der Elektrodenabstand (d), d. h. der Abstand zwischen mindestens einer verstellbaren Elektrode (7) und einem Schmelzbad (11) des Lichtbogenofens (8), in Abhängigkeit von der Differenz zwischen einem vorgebbaren Elektrodenregler-Führungsgrössensignal (αₛₒₗₗ) und dem Gleichrichter-Stellgrössensignal (αᵢₛₜ) geregelt wird.

2. Verfahren nach Anspruch 1, dadurch gekennzeichnet, dass das Gleichrichter-Stellgrössensignal (αᵢₛₜ) vor einem Vergleich mit dem Elektrodenregler-Führungsgrössensignal (αₛₒₗₗ) auf eine Grenzwertüberschreitung überwacht und/oder gedämpft wird.

3. Verfahren nach Anspruch 1 oder 2, dadurch gekennzeichnet, dass aus dem Gleichrichter-Stellgrössensignal (αᵢₛₜ) vor einem Vergleich mit dem Elektrodenregler-Führungsgrössensignal (αₛₒₗₗ) unerwünschte Frequenzen ausgesiebt werden.

4. Verfahren nach Anspruch 2 oder 3, dadurch gekennzeichnet,
a) dass das Elektrodenregler-Führungsgrössensignal (αₛₒₗₗ) ein Zündwinkelsignal für einen Gleichrichters (5) ist, das auf einen Zündwinkelsollwert (αₛₒₗₗ) im Bereich von 15° - 50°,
b) insbesondere im Bereich von 25° - 35° geregelt wird.

5. Elektrodenregeleinrichtung für einen Gleichstrom-Lichtbogenofen (8)
a) der mindestens eine verstellbare Elektrode (7) aufweist, die mit einem Stromrichter (5) in Wirkverbindung steht,
b) welcher von einem Stromregler (14) geregelt wird, und
c) mit einer Elektrodenverstelleinrichtung (21) zur Einstellung eines Elektrodenabstandes (d) zwischen der mindestens einen Elektrode (7) und einem Schmelzbad (11) des Lichtbogenofens (8),
d) welches von einem Elektrodenregler (18) geregelt wird,
dadurch gekennzeichnet,
e) dass der Elektrodenregler (18) eingangsseitig mit dem Ausgang des Stromreglers (14) in Wirkverbindung steht.

6. Elektrodenregeleinrichtung nach Anspruch 5, dadurch gekennzeichnet,
a) dass der Elektrodenregler (18) eingangsseitig über ein Bandpassfilter (16) oder
b) über ein Dämpfungsglied mit dem Ausgang des Stromreglers (14) in Wirkverbindung steht.

7. Elektrodenregeleinrichtung nach Anspruch 5 oder 6, dadurch gekennzeichnet, dass dem Elektrodenregler (18) eingangsseitig das Differenzsignal eines Elektrodenregler-Führungsgrössensignals (αₛₒₗₗ) und eines Gleichrichter-Stellgrössensignals (αᵢₛₜ) zugeführt ist.

8. Elektrodenregeleinrichtung nach Anspruch 7, dadurch gekennzeichnet,
a) dass das Gleichrichter-Stellgrössensignal (αᵢₛₜ) ein Zündwinkelsignal für einen Gleichrichters (5) ist,
b) dass das Elektrodenregler-Führungsgrössensignal (αₛₒₗₗ) einem Zündwinkelsollwert im Bereich von 15° - 50°,
c) insbesondere im Bereich von 25° - 35° entspricht.

9. Verfahren nach einem der Ansprüche 1 bis 4, dadurch gekennzeichnet,
a) dass das Elektrodenregler-Führungsgrössensignal (αₛₒₗₗ) in Abhängigkeit von dem Stromsollwert (iₛₒₗₗ) gebildet wird, derart,
b) dass ein vorgebbarer Wirkfaktor (cos φ) eingehalten wird,
c) insbesondere, dass der Wirkfaktor vorgebbare Grenzwerte (cos φ = 0,75, cos φ = 1) nicht unter- bzw. überschreitet.

10. Verfahren nach Anspruch 9, dadurch gekennzeichnet, dass das Elektrodenregler-Führungsgrössensignal (αₛₒₗₗ) so vorgegeben wird, dass eine vorgebbare Grenz-Netzblindleistung (C) nicht überschritten wird.

## Claims

1. Process for electrode control of a DC arc furnace (8),
a) whose arc current intensity is controlled by means of a control signal or a rectifier manipulated variable signal (α_{act}) to a prescribable desired current value (i_{des}),
characterized in that
b) the electrode separation (d), that is to say the distance between at least one adjustable electrode (7) and a molten bath (11) of the arc furnace (8), is controlled as a function of the difference between a prescribable electrode controller reference variable signal (α_{des}) and the rectifier manipulated variable signal (α_{act}).

2. Process according to Claim 1, characterized in that, before comparison with the electrode controller reference variable signal (α_{des}), the rectifier manipulated variable signal (α_{act}) is monitored for overshooting of the limiting value and/or attenuated.

3. Process according to Claim 1 or 2, characterized in that, before comparison with the electrode controller reference variable signal (α_{des}), undesired frequencies are filtered out from the rectifier manipulated variable signal (α_{act}).

4. Process according to Claim 2 or 3, characterized in that
a) the electrode controller reference variable signal (α_{des}) is a turn-on angle signal for a rectifier (5) which is controlled to a desired turn-on angle value (α_{des}) in the range of 15° - 50°,
b) in particular in the range of 25° - 35°.

5. Electrode control device for a DC arc furnace (8)
a) which has at least one adjustable electrode (7), which is operationally connected to a converter (5),
b) which is controlled by a current controller (14), and
c) having an electrode adjusting device (21) for adjusting an electrode separation (d) between the at least one electrode (7) and a molten bath (11) of the arc furnace (8),
d) which is controlled by an electrode controller (18),
characterized in that
e) the electrode controller (18) is operationally connected on the input side to the output of the current controller (14).

6. Electrode control device according to Claim 5, characterized in that
a) the electrode controller (18) is operationally connected on the input side via a bandpass filter (16) or
b) via an attenuator to the output of the current controller (14).

7. Electrode control device according to Claim 5 or 6, characterized in that the difference signal of an electrode controller reference variable signal (α_{des}) and of a rectifier manipulated variable signal (α_{act}) is fed on the input side to the electrode controller (18).

8. Electrode control device according to Claim 7, characterized in that
a) the rectifier manipulated variable signal (α_{act}) is a turn-on angle signal for a rectifier (5),
b) the electrode controller reference variable signal (α_{des}) corresponds to a desired turn-on angle value in the range of 15° - 50°,
c) in particular in the range of 25° - 35°.

9. Process according to one of Claims 1 to 4, characterized in that
a) the electrode controller reference variable signal (α_{des}) is formed as a function of the desired current value (i_{des}) in such a way that
b) a prescribable operational factor (cos φ) is adhered to,
c) in particular that the operational factor does not undershoot or exceed prescribable limiting values (cos φ = 0.75, cos φ = 1).

10. Process according to Claim 9, characterized in that the electrode controller reference variable signal (α_{des}) is prescribed in such a way that a prescribable limiting mains reactive power (C) is not exceeded.

## Revendications

1. Procédé de régulation des électrodes d'un four arc à courant continu (8),
a) dont l'intensité de courant d'arc électrique est réglée à une valeur de consigne du courant (i_{consigne}), qui peut être donnée à l'avance, à l'aide d'un signal de régulation, respectivement d'un signal de variable réglante du redresseur (alpha_{effectif}),
caractérisé en ce que
b) l'écartement des électrodes (d), c'est-à-dire la distance entre au moins une électrode ajustable (7) et un bain de fusion (11) du four à arc (8), est réglé en fonction de la différence entre un signal de grandeur de commande du régulateur d'électrodes (alpha_{consigne}), qui peut être donné à l'avance, et le signal de variable réglante du redresseur (alpha_{effectif}).

2. Procédé selon la revendication 1, caractérisé en ce que le signal de variable réglante du redresseur (alpha_{effectif}) est surveillé et/ou atténué pour ce qui est d'un dépassement de valeur-limite avant une comparaison avec le signal de grandeur de commande (alpha_{consigne}) de régulateur d'électrodes.

3. Procédé selon la revendication 1 ou 2, caractérisé en ce que l'on filtre les fréquences indésirables du signal de variable réglante du redresseur (alpha_{effectif}) avant une comparaison avec le signal de grandeur de commande de régulateur d'électrodes (alpha_{consigne}).

4. Procédé selon la revendication 2 ou 3, caractérisé en ce que
a) le signal de grandeur de commande (alpha_{consigne}) du régulateur d'électrodes est un signal d'angle d'amorçage pour un redresseur (5), qui est réglé sur une valeur de consigne d'angle d'amorçage (alpha_{consigne}) dans le domaine de 15° - 50°,
b) en particulier dans le domaine de 25° - 35°.

5. Installation de régulation des électrodes pour un four à arc à courant continu (8)
a) qui présente au moins une électrode ajustable (7), qui est en relation active avec un convertisseur de courant (5)
b) lequel est réglé par un régulateur de courant (14) et
c) avec une installation d'ajustage des électrodes (21) pour l'ajustage d'un écartement d'électrodes (d) entre au moins une électrode (7) et un bain de fusion (11) de l'arc à four (8),
d) qui est réglé par un régulateur d'électrodes (18),
caractérisée en ce que
e) le régulateur d'électrodes (18) se trouve en relation active du coté entrée avec la sortie du régulateur de courant (14).

6. Installation de régulation des électrodes selon la revendication 5, caractérisée en ce que
a) le régulateur d'électrodes (18) est en relation active du coté entrée par l'entremise d'un filtre à bande passante (16) ou
b) d'un atténuateur avec la sortie du régulateur de courant (14).

7. Installation de régulation des électrodes selon la revendication 5 ou 6, caractérisée en ce que l'on amène au régulateur d'électrodes (18) du coté entrée le signal de différence d'un signal de grandeur de commande de régulateur d'électrodes (alpha_{consigne})et du signal de variable réglante du redresseur (alpha_{effectif}).

8. Installation de régulation des électrodes selon la revendication 7, caractérisée en ce
a) que le signal de variable réglante du redresseur (alpha_{effectif}) est un signal d'angle d'amorçage pour un redresseur (5),
b) que le signal de grandeur de commande de régulateur d'électrodes (alpha_{consigne}) correspond à une valeur de consigne d'angle d'amorçage dans le domaine de 15° - 50°,
c) en particulier dans le domaine de 25° - 35°.

9. Procédé selon l'une quelconque des revendications 1 à 4, caractérisé en ce
a) que le signal de grandeur de commande de régulateur d'électrodes (alpha_{consigne}) est formé en fonction de la valeur de consigne de courant (i_{consigne}), de telle sorte
b) qu'un facteur actif, qui peut être donné à l'avance, (cos phi), soit respecté,
c) particulièrement, que le facteur actif ne passe ni au dessus, ni en dessous des valeurs-limite qui peuvent être données à l'avance (cos phi = 0,75, cos phi = 1).

10. Procédé selon la revendication 9, caractérisé en ce que le signal de grandeur de commande de régulateur d'électrodes (alpha_{consigne}) est donné à l'avance de sorte qu'une puissance réactive limite (C), qui peut être donnée à l'avance, ne soit pas dépassée.
